# EUROPEAN PATENT SPECIFICATION

(11) **EP 3 226 341 B1**
(45) Date of publication and mention of the grant of the patent: **21.08.2019**
(21) Application number: 17159065.6
(22) Date of filing: 03.03.2017
(51) Int. Cl.: H01M 10/12, H01M 10/04

(54) **IMPROVED PLANT FOR THE FORMATION OF LEAD-ACID BATTERIES AND PROCESS FOR THE FORMATION OF LEAD-ACID BATTERIES BY MEANS OF SAID PLANT**
VERBESSERTE ANLAGE FÜR DIE FORMIERUNG VON BLEIAKKUMULATOREN UND PROZESS FÜR DIE FORMIERUNG VON BLEIAKKUMULATOREN MITTELS DER ANLAGE
INSTALLATION AMÉLIORÈE POUR LA FORMATION D'ACCUMULATEURS AU PLOMB ET PROCÉDÉ POUR LA FORMATION D'ACCUMULATEURS AU PLOMB AVEC CETTE INSTALLATION

(30) Priority: 31.03.2016 IT UA20162134
(43) Date of publication of application: 04.10.2017
(73) Proprietor: O.M. Impianti S.r.l., 20872 Cornate d'Adda (MB) (IT)
(72) Inventor: MAGGIONI, Osvaldo, 20872 Cornate d'Adda (MB) (IT)
(74) Representative: Rastelli, Franco

(56) References cited:
- WO-A2-2006/126903
- CN-U- 202 949 010
- CN-U- 203 983 420
- CN-U- 204 361 194
- JP-A- 2000 195 508
- US-A- 4 215 307

## Description

### BACKGROUND OF THE INVENTION

The present invention concerns an improved plant for the formation of lead-acid batteries. The invention also concerns the process of formation of the lead-acid batteries by means of said plant.

The field of the invention is that of equipment used for the formation or charging of lead-acid batteries. This equipment normally consists of tanks filled with water, in which the batteries are immersed in a bain-marie, thus regulating their temperature during the battery formation process.

The traditional tanks of the type described above, in which the filling water is obtained each time from sources external to the plant, have the drawback of not guaranteeing, in a uniform manner for all the batteries immersed in the tank, control and regulation of the temperature of said batteries during charging. Consequently, the plants currently known form batteries which, at the end of the formation, have cells filled with different levels of electrolyte, therefore formed in non-uniform cooling conditions inside the tank. Further differences are found in the temperature conditions applied in the various battery charging phases.

WO 2006/126903 A2 discloses a battery forming unit, provided with water ducts containing water level regulators mounted on the side walls of a tank. A battery forming unit with cooling water recirculation means is further described in JP2000195508.

### SUMMARY OF THE INVENTION

The main object of the present invention is therefore to provide a plant for the formation of lead-acid batteries which, unlike the known plants of the same type, allows the temperature of the formation process to be regulated rapidly and safely, thus obtaining batteries with optimal charge level.

A further object of the invention is to provide a plant of the above-mentioned type, which is able to produce batteries having a uniform formation within the same charge cycle in the tank.

A further object of the invention is to perform the lead-acid battery charging process using the above plant.

These and other objects are achieved by the plant and process of claims 1 and 8 respectively. Preferred methods of producing the invention are described in the remaining claims.

With respect to the traditional plants for the formation of lead-acid batteries, the plant of the invention offers the advantage of ensuring rapid regulation of the battery temperature, thus adapting it to the individual battery formation phases inside the tank.

The plant of the invention offers the further advantage of producing, within the same formation cycle in the tank, batteries having the same charge level, understood as degree of transformation of the lead plates from PbO to PbO₂.

In particular, the presence of the cold water reservoir, directly incorporated in the plant which includes the tank in which the batteries are immersed, has the advantage of allowing modification, in a rapid practically instantaneous way, of the temperature of the water inside said tank, effectively changing the temperature according to the different battery charging phases.

Furthermore, due to exploitation of the above-mentioned characteristic, it is possible to regulate in continuous mode the acidity of the water circulating between the reservoir and the scrubber/evaporation tower assembly, thus avoiding the risk of the circulation of excessively acid water in the plant.

In addition, exploitation of the cooled condensate coming from the cited scrubber/evaporation tower assembly and the use of countercurrent recirculation between the air extracted from the reservoir and the tank overflow water contribute to cooling the water in said reservoir, thus making up for any lack of external coolant and in general reducing the overall costs of running the plant and of the battery formation process as a whole.

In particular, the rapid availability of relatively cold water in the tank allows stabilization of the negative battery plate during the corresponding charging phase, thus avoiding the risk of the plate deteriorating or being altered during subsequent charging of the positive battery plate, this time performed at a higher temperature than previously.

### BRIEF DESCRIPTION OF THE DRAWINGS

These and other objects, advantages and characteristics will become clear from the following description of a preferred method of producing the plant of the invention illustrated, by way of non-limiting example, in the figures of the attached drawings. In them:
- figure 1 illustrates schematically a lead-acid battery;
- figure 2 illustrates in an overview an example of the plant of the invention; and

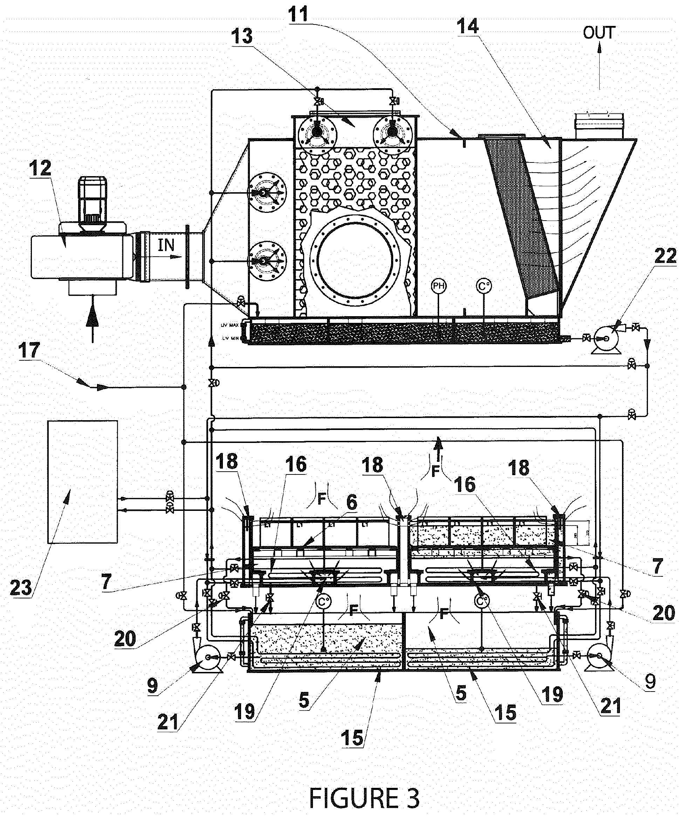

- figure 3 illustrates the operating diagram of the plant of figure 2.

### DESCRIPTION OF THE PREFERRED EMBODIMENTS

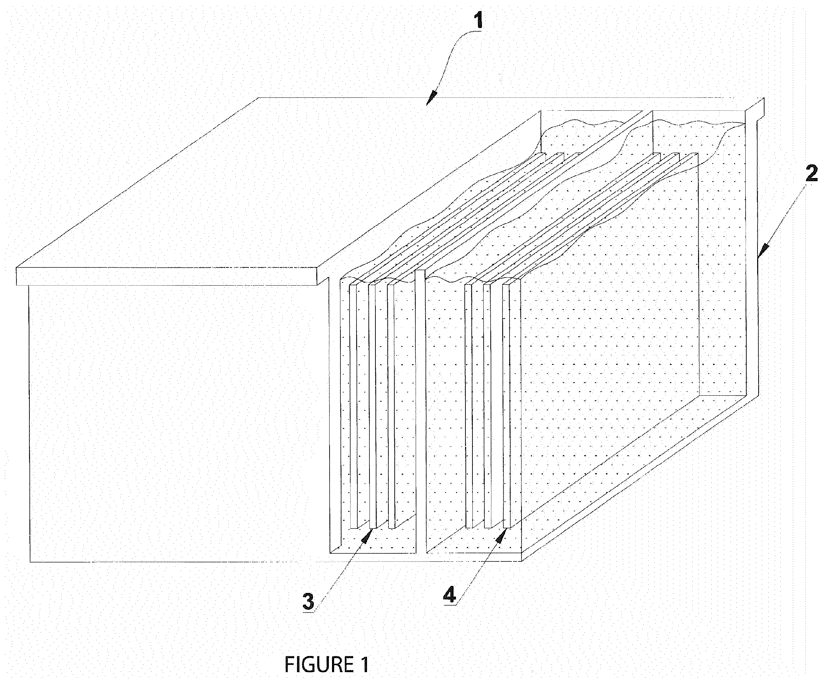

The battery illustrated in figure 1 is indicated overall by the reference number 1 and comprises a single-block body 2 made of thermoplastic material. Inside the body 2 the lead plates 3 are mounted which form the positive pole of the battery and the lead plates 4 which form the negative pole, where each pair of plates 3 and 4 is confined to the inside of the specific cell of the battery 1.

The formation of the battery, or the process used for charging it, comprises:
- a first phase, or filling phase, in which the electrolyte is injected into the individual battery cells;
- a second phase, or sulphation phase, in which the reaction between the acid electrolyte and the lead of plates 3 and 4 is initiated; and
- a third battery charging phase, in which initial formation of the negative plate 4 and then of the positive plate 3 occurs.

According to the invention, the charging process described above entails differentiated regulation of the temperature of the water in which the batteries are immersed, according to the individual phases mentioned above and in order to bring this temperature to the most suitable value for reaching optimal charge of the batteries in the tank.

In particular, in the sulphation phase, cooling must be performed in order to remove from the battery the heat generated by the corresponding exothermic reaction. In the formation phase of the negative plate 4 it is useful to further lower the battery temperature, thus stabilizing said plate 4 during subsequent charging of the positive plate 3 which, as it has to be performed at a higher temperature, could cause degradation of the latter.

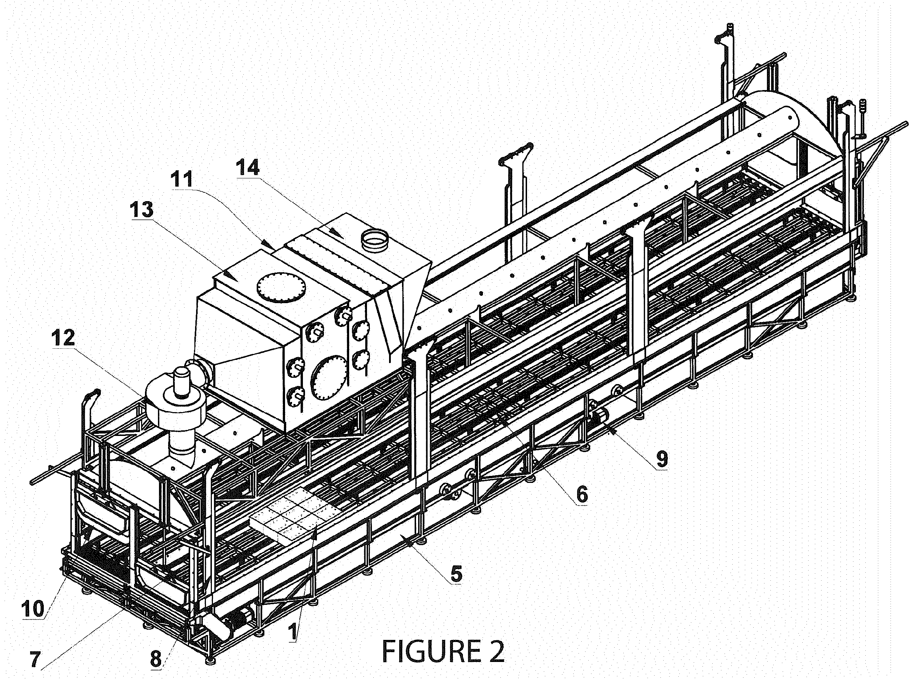

The plant of the invention, as illustrated in figure 2, is produced for said purpose. Said plant comprises a frame 8, on which the cooling water storage reservoir 5 is mounted. On the same frame 8 and above the reservoir 5, the tank 7 containing the batteries 1 to be formed is mounted, in turn supported by a conveyor belt 6, also arranged inside the tank 7. A pump 9 is provided to circulate the battery cooling water between the reservoir 5 and the tank 7. The latter is further provided with partitions 10, designed to provide the necessary hydraulic seal to the cooling water which fills the tank 7 and in which the batteries 1 are immersed.

The plant of figure 2 is further equipped with the fume extraction and treatment unit 11 for extracting and treating the fumes released from the tank 7 during formation of the batteries. This unit 11 comprises a fan 12, a scrubber 13 and an evaporation tower 14 for formation of the cooled condensate which is then in turn sent to the water recirculation towards the tank 7.

The reservoir 5 of the plant of the invention is provided with a cooling coil 15 for cooling the water collected inside this reservoir, where the medium circulating inside said coil consists of the condensate coming from the evaporation tower 14, supplied by means of a pump 22. If the water collected in the reservoir 5 requires more intense cooling, the coil 15 can be supplied also with cooled water coming from the external cooler 23. The water in the reservoir 5 is topped up with mains water 17.

An analogous coil 16 can be provided on the bottom of the tank 7, designed to correct if necessary the temperature of the water supplied by the reservoir. The cooling medium circulating in the coil 16 is represented by the cold water coming from the evaporation tower 14 or, alternatively, from the external cooler 23, by means of a separate circuit which is autonomous with respect to the circuit supplying the coil 15 of the reservoir 5. It should be pointed out that the invention is not limited to this variation. In fact, the advantageous results described above can be achieved also by using only the coil 15 of the reservoir 5, since it is sufficient to give the water in the tank 7 the correct battery charging temperature.

From the reservoir 5 the water is supplied, by means of the pump 9, to the distributor 19 positioned on the bottom of the tank 7, in order to fill it to the desired level. The tank 7 is in turn equipped with overflow outlets 18 which recirculate this excess water towards the reservoir 5. Advantageously the outlets 18 are positioned in countercurrent with the suction F of the air from the reservoir 5, thus contributing to cooling the water which collects inside said reservoir. Foot valves 20 and 21 are also provided for discharge of the water, partial and total respectively, from the tank 7 to the reservoir 5.

In the sulphation phase, which is preferably performed at a battery temperature of approximately 40°C, the tank 7 is filled with water coming from the reservoir 5 and cooled inside this reservoir. The control of the battery temperature, in order to bring it to the desired value, is carried out either by discharging water from the tank 7 to the reservoir 5, if the cooling is excessive, or by pumping new water from the reservoir towards the tank 7, if the temperature is too high. Appropriate control systems, not illustrated, could furthermore be used to coordinate the temperature of the batteries in the tank 7 with that of the cooling medium circulating in the coil 15 of the reservoir 5.

In the charging phase, which begins with formation of the negative plates 4 of the batteries 1 located in the tank 7, the temperature must be further lowered to approximately 25-30°C. For this purpose the water in the reservoir 5 is cooled, by means of the coil 15, to the required temperature and from here pumped into the tank 7. A further correction of this temperature can be performed by the coil 16 located on the bottom of the tank 7.

As the charging phase proceeds, for correct formation also of the positive plates 3, the temperature of the batteries must be brought to approximately 60°C. For this purpose the water in the tank 7 is discharged through the partial outlet valve 20, until reaching a level sufficient to give the batteries the desired temperature. Subsequently the water recirculation between the reservoir 5 and the tank 7 is activated in order to maintain the temperature inside the individual batteries constant, until completion of the charging cycle. The cited water recirculation phase is in particular performed by means of the pump 9, which pumps the water from the reservoir 5 to the tank 7. The overflow outlet 18 transfers the water from the tank 7 to the reservoir 5.

Advantageously, before taking the batteries 1 out of the tank 7, they can be kept for a certain time inside the latter, this time filled with cold water which serves to bring the batteries, in a uniform manner, to the temperature required for carrying out the subsequent finishing tests.

Modifications can be made to the invention, as described and illustrated in the figures of the accompanying drawings, to produce variations which still fall within the scope of the following claims. Thus, for example, on the frame 8 of the plant of the invention more than one tank 7 could be mounted, together with the corresponding number of reservoirs 5. The conveyor belt 6 could be replaced by motorized trays, while independent circuits could be provided for circulation of the cooling water, supplied to the reservoir 5 by the external cooler 23 and by the evaporation tower 14 respectively.

## Claims

1. A plant for the formation of lead-acid batteries, of the type comprising at least one tank (7) supported by a frame (8) and filled with water in which said batteries are immersed, a system for controlling and regulating the temperature of the water contained in said tank (7) being provided for bringing said batteries (1) to the correct temperature during the individual phases of their formation process, **characterized in that** said system comprises at least one reservoir (5) of water to be sent to said tank (7), said reservoir (5) being also mounted on said supporting frame (8) of the tank (7) and being provided with a coil (15) for regulating the water temperature, said coil (15) being mounted immersed into the water contained in said reservoir (5).

2. A plant according to claim 1, **characterized in that** said system for controlling and regulating the water temperature comprises the recirculation of the water between the reservoir (5) and the tank (7), by means of a pump (9) on the reservoir (5) and overflow outlets (18), distributors (19) and foot valves (20, 21) on said tank (7).

3. A plant according to claim 2, **characterized in that** it comprises a top-up (17) of mains water to the reservoir (5).

4. A plant according to claim 3, **characterized in that** it further comprises a fume treatment unit (11), comprising a fan (12) for suction of the fumes from the tank (7), a scrubber (13) for treating the fumes extracted by said fan (12) and an evaporation tower (14) for the condensation of the vapours from said scrubber (13).

5. A plant according to claim 4, **characterized in that** said tank (7) is provided with a coil (16) for cooling the water, the hydraulic circuits of said coils (15, 16) being independent of each other.

6. A plant according to claim 5, **characterized in that** said coils (15, 16) are supplied with cold water coming from an external cooler (23) and with the condensation water coming from said evaporation tower (14).

7. A plant according to claim 6, **characterized in that** it comprises conveying means (6) for transferring the batteries (1) inside said tank (7), partitions (10) being further provided to hydraulically seal said tank (7) during the battery formation process.

8. A process for the formation of lead-acid batteries using the plant according to one or more of the preceding claims, **characterized in that** it comprises control and regulation of the formation temperature of said batteries in the various phases of formation thereof.

9. A process according to claim 8, **characterized in that** it comprises:
(a) a filling step, in which the electrolyte is injected inside the cells of the batteries (1) which will be formed in the tank (7);
(b) a sulphation step, in which the batteries are cooled with water in the tank (7) at a temperature T1;
c) a battery charging step, in which initially the negative plates (4) are formed at a temperature T2 lower than T1, and subsequently the water is heated, until bringing the batteries to a temperature T3 higher than T1, suitable for formation of the positive plates (3) of said batteries.

10. A process according to claim 9, **characterized in that,** in the cited step (b), the water is discharged from the tank (7) towards the reservoir (5) if the temperature is not optimal, while new cold water is pumped from said reservoir towards said tank if the temperature of the water in the tank (7) is too high.

11. A process according to claim 9, **characterized in that,** during said formation of the positive plates (3) in the cited step (c), the water in the tank (7) is partially discharged through said partial discharge valve (20) and **in that,** subsequently, recirculation of the water is activated between the reservoir (5) and the tank (7), in order to maintain the temperature constant inside the single batteries, until completion of the charging cycle.

12. A process according to claim 9, **characterized in that,** before taking the batteries (1) out of the tank (7), a further step (d) is performed of keeping the batteries immersed in said tank for a time sufficient to bring them to the temperature required for carrying out the subsequent finishing tests.

13. A process according to one or more of the preceding claims, **characterized in that** it comprises a further correction of the temperature of the batteries immersed in the tank (7), by means of the cited coil (16) which is located on the bottom of said tank (7).

## Patentansprüche

1. Eine Anlage für die Herstellung von Bleibatterien des Typs, welcher mindestens einen Tank (7) umfasst, der von einem Gestell (8) gehalten wird und mit Wasser gefüllt ist, in das die genannten Batterien getaucht sind, wobei ein System zur Kontrolle und Regulierung der Temperatur des in dem genannten Tank (7) enthaltenen Wassers vorgesehen ist, um die genannten Batterien (1) jeweils auf die korrekte Temperatur während der einzelnen Phasen ihres Herstellungsverfahrens zu bringen, **dadurch gekennzeichnet, dass** das genannte System mindestens einen Behälter (5) mit Wasser umfasst, das zu dem genannten Tank (7) geschickt wird, wobei der genannte Behälter (5) ebenfalls an genanntes Haltegestell (8) des Tanks (7) montiert ist und mit einer Spirale (15) zur Regulierung der Wassertemperatur ausgerüstet ist, die genannte Spirale (15) in das in genanntem Behälter (5) enthaltene Wasser eingetaucht montiert ist.

2. Eine Anlage gemäß Anspruch 1, **dadurch gekennzeichnet, dass** das genannte System zur Kontrolle und Regulierung der Wassertemperatur die Rezirkulation des Wassers zwischen dem Behälter (5) und dem Tank (7) mit Hilfe einer Pumpe (9) auf dem Behälter (5) sowie entsprechende Überlaufabflüsse (18), Verteiler (19) und Fußventile (20, 21) an dem genannten Tank (7) umfasst.

3. Eine Anlage gemäß Anspruch 2, **dadurch gekennzeichnet, dass** sie ein Nachfüllen (17) des Leitungswassers in den Behälter (5) umfasst.

4. Eine Anlage gemäß Anspruch 3, **dadurch gekennzeichnet, dass** sie desweiteren eine Abgasbehandlungseinheit (11) umfasst, welche einen Ventilator (12) zur Absaugung der Abgase von dem Tank (7) umfasst, einen scrubber (13) zur Behandlung der Abgase, die von dem genannten Ventilator (12) abgesaugt werden, und einen Evaporationsturm (14) für die Kondensation der von dem genannten Gaswäscher (13) kommenden Dämpfe.

5. Eine Anlage gemäß Anspruch 4, **dadurch gekennzeichnet, dass** der genannte Tank (7) mit einer Spirale (16) zur Kühlung des Wassers ausgerüstet ist, wobei die Hydraulikkreise der genannten Spiralen (15, 16) jeweils unabhängig voneinander sind.

6. Eine Anlage gemäß Anspruch 5, **dadurch gekennzeichnet, dass** die genannten Spiralen (15, 16) mit kaltem Wasser, das von einem externen Kühler (23) stammt, und mit dem Kondensationswasser, das von dem genannten Verdampfungsturm (14) kommt, gespeist werden.

7. Eine Anlage gemäß Anspruch 6, **dadurch gekennzeichnet, dass** sie Förderelemente (6) für den Transport der Batterien (1) in dem genannten Tank (7) umfasst, wobei desweiteren jeweils entsprechende Trennwände (10) vorgesehen sind, um den genannten Tank (7) während des Batterieherstellungsverfahrens hydraulisch zu versiegeln.

8. Ein Verfahren zur Herstellung von Bleibatterien bei Anwendung der Anlage gemäß einem oder mehreren der vorausgegangenen Ansprüche, **dadurch gekennzeichnet, dass** es die Kontrolle und Regulierung der Herstellungstemperatur der genannten Batterien während der einzelnen Phasen von deren Herstellung umfasst.

9. Ein Verfahren gemäß Anspruch 8, **dadurch gekennzeichnet, dass** es umfasst:
(a) Einen Füllschritt, bei dem das Elektrolyt in die Zellen der Batterien (1) injiziert wird, welche in dem Tank (7) hergestellt werden;
(b) Einen Sulphatierungsschritt, bei dem die Batterien mit dem Wasser im Tank (7) bei einer Temperatur T1 gekühlt werden;
c) einen Batterieladeschritt, bei dem die negativen Platten (4) anfangs bei einer Temperatur T2 hergestellt werden, die niedriger als T1 ist, und wobei das Wasser anschließend aufgeheizt wird, bis die Batterien auf die Temperatur T3, die höher als T1 ist, gebracht werden, die für die Herstellung der positiven Platten (3) der genannten Batterien geeignet ist.

10. Ein Verfahren gemäß Anspruch 9, **dadurch gekennzeichnet, dass** das Wasser in dem genannten Schritt (b) aus dem Tank (7) abgelassen wird in Richtung des Behälters (5), wenn die Temperatur nicht optimal ist, während frisches kaltes Wasser aus dem genannten Behälter zu dem genannten Tank gepumpt wird, falls die Temperatur des Wassers im Tank (7) zu hoch ist.

11. Ein Verfahren gemäß Anspruch 9, **dadurch gekennzeichnet, dass** das Wasser in Tank (7) während der genannten Herstellung der positiven Platten (3) in dem erwähnten Schritt (c) teilweise durch das genannten Teilablassventil (20) abgelassen wird, sowie **dadurch,** dass anschließend eine Rezirkulation des Wassers zwischen dem Behälter (5) und dem Tank (7) veranlasst wird, um die Temperatur im Inneren von in den einzelnen Batterien bis zur Beendung des Ladezyklus konstant zu halten.

12. Ein Verfahren gemäß Anspruch 9, **dadurch gekennzeichnet, dass**, bevor die Batterien (1) aus dem Tank (7) genommen werden, ein weiterer Schritt (d) stattfindet, bei dem die Batterien in den genannten Tank eingetaucht bleiben, und zwar während eines Zeitraums, der ausreicht, um sie auf die Temperatur zu bringen, die jeweils erforderlich ist, um die anschließenden Endverarbeitungstests ausführen zu können.

13. Ein Verfahren gemäß einem oder mehreren der vorausgegangenen Ansprüche, **dadurch gekennzeichnet, dass** es eine weitere Temperaturkorrektur der in den Tank (7) eingetauchten Batterien umfasst, und zwar mit Hilfe der erwähnten Spirale (16), welche sich am Boden des genannten Tanks (7) befindet.

## Revendications

1. Installation pour la formation de batteries plomb-acide, du type comprenant au moins une cuve (7) supportée par un châssis (8) et remplie avec de l'eau dans laquelle lesdites batteries sont immergées, un système pour commander et réguler la température de l'eau contenue dans ladite cuve (7) étant prévu pour amener lesdites batteries (1) à la température correcte durant les phases individuelles de leur processus de formation, **caractérisée en ce que** ledit système comprend au moins un réservoir (5) d'eau à envoyer à ladite cuve (7), ledit réservoir (5) étant également monté sur ledit châssis de support (8) de la cuve (7) et étant muni d'une spirale (15) pour réguler la température de l'eau, ladite spirale (15) étant montée immergée dans l'eau contenue dans ledit réservoir (5).

2. Installation selon la revendication 1, **caractérisée en ce que** ledit système pour commander et réguler la température de l'eau comprend la recirculation de l'eau entre le réservoir (5) et la cuve (7), au moyen d'une pompe (9) sur le réservoir (5) et de sorties de trop-plein (18), de distributeurs (19) et de clapets de pied (20, 21) sur ladite cuve (7).

3. Installation selon la revendication 2, **caractérisée en ce qu'**elle comprend un complément (17) d'eau courante vers le réservoir (5).

4. Installation selon la revendication 3, **caractérisée en ce qu'**elle comprend en outre une unité de traitement des fumées (11), comprenant un ventilateur (12) pour l'aspiration des fumées à partir de la cuve (7), un épurateur (13) pour traiter les fumées extraites par ledit ventilateur (12) et une tour d'évaporation (14) pour la condensation des vapeurs provenant dudit épurateur (13).

5. Installation selon la revendication 4, **caractérisée en ce que** ladite cuve (7) est munie d'une spirale (16) pour refroidir l'eau, les circuits hydrauliques desdites spirales (15, 16) étant indépendants l'un de l'autre.

6. Installation selon la revendication 5, **caractérisée en ce que** lesdites spirales (15, 16) sont alimentées avec de l'eau froide provenant d'un refroidisseur externe (23) et avec l'eau de condensation provenant de ladite tour d'évaporation (14).

7. Installation selon la revendication 6, **caractérisée en ce qu'**elle comprend des moyens de transport (6) pour transférer les batteries (1) à l'intérieur de ladite cuve (7), des partitions (10) étant disposées en outre pour sceller hydrauliquement ladite cuve (7) durant le processus de formation de batteries.

8. Procédé pour la formation de batteries plomb-acide en utilisant l'installation selon une ou plusieurs des revendications précédentes, **caractérisé en ce qu'**il comprend une commande et une régulation de la température de formation desdites batteries dans les diverses phases de leur formation.

9. Procédé selon la revendication 8, **caractérisé en ce qu'**il comprend :
(a) une étape de remplissage, dans laquelle l'électrolyte est injecté à l'intérieur des cellules des batteries (1) qui seront formées dans la cuve (7) ;
(b) une étape de sulfatation, dans laquelle les batteries sont refroidies avec de l'eau dans la cuve (7) à une température T1 ;
(c) une étape de charge de batterie, dans laquelle, initialement, les plaques négatives (4) sont formées à une température T2 inférieure à T1, et, subséquemment, l'eau est chauffée, jusqu'à amener les batteries à une température T3 supérieure à T1, adaptée pour la formation des plaques positives (3) desdites batteries.

10. Procédé selon la revendication 9, **caractérisé en ce que,** dans l'étape (b) précitée, l'eau est déchargée de la cuve (7) vers le réservoir (5) si la température n'est pas optimale, alors que de l'eau froide nouvelle est pompée à partir dudit réservoir vers ladite cuve si la température de l'eau dans la cuve (7) est trop élevée.

11. Procédé selon la revendication 9, **caractérisé en ce que,** durant ladite formation des plaques positives (3) dans l'étape (c) précitée, l'eau dans la cuve (7) est déchargée partiellement à travers ladite vanne de décharge partielle (20) et **en ce que,** subséquemment, une recirculation de l'eau est activée entre le réservoir (5) et la cuve (7), de manière à maintenir la température constante à l'intérieur des batteries individuelles, jusqu'à l'achèvement du cycle de charge.

12. Procédé selon la revendication 9, **caractérisé en ce que,** avant l'enlèvement des batteries (1) hors de la cuve (7), une autre étape (d) est effectuée pour maintenir les batteries immergées dans ladite cuve pendant un temps suffisant pour les amener à la température nécessaire pour exécuter les tests de finition subséquents.

13. Procédé selon une ou plusieurs des revendications précédentes, **caractérisé en ce qu'**il comprend une autre correction de la température des batteries immergées dans la cuve (7), au moyen de la spirale précitée (16) qui est située sur le fond de ladite cuve (7).
